# EUROPÄISCHE PATENTSCHRIFT

(11) **EP 2 436 257 B1**
(45) Veröffentlichungstag und Bekanntmachung des Hinweises auf die Patenterteilung: **19.02.2014**
(21) Anmeldenummer: 11175129.3
(22) Anmeldetag: 25.07.2011
(51) Int. Cl.: A01D 41/14

(54) **Schneidwerk für selbstfahrende Erntemaschine**
Cutting header for self-propelled agricultural harvester
Barre de coupe pour une moissonneuse automobile

(30) Priorität: 29.09.2010 DE 102010046862
(43) Veröffentlichungstag der Anmeldung: 04.04.2012
(73) Patentinhaber: CLAAS Selbstfahrende Erntemaschinen GmbH, 33428 Harsewinkel (DE)
(72) Erfinder: Bürmann, Dominik, 33415 Verl (DE)

(56) Entgegenhaltungen:
- EP-A1- 0 726 025
- EP-B1- 1 453 372
- WO-A1-02/19793

## Beschreibung

Die Erfindung betrifft ein Schneidwerk für eine selbstfahrende Erntemaschine mit einem ein Mähwerk aufnehmenden Schneidtisch, an dem ein Bodenblech ausgebildet ist und der mittels einer Stelleinrichtung gegenüber einer Schneidwerksmulde in oder entgegen einer Mährichtung derart verschiebbar ist, dass unterschiedliche Lagen des Mähwerks gegenüber der Schneidwerksmulde einstellbar sind, wobei bei einer Verstellung des Schneidtisches gegenüber der Schneidwerksmulde in Mährichtung zwischen dieser und dem Bodenblech ein Zwischenraum entstehen kann, der durch ein gegenüber der Schneidwerksmulde längsverschiebbares Übergangsblech verschließbar ist.

Bei selbstfahrenden Erntemaschinen der genannten Gattung soll es sich vorzugsweise um selbstfahrende Mähdrescher handeln, in deren vorderem Bereich ein höheneinstellbares Schneidwerk der angegebenen Bauweise angeordnet ist. Neben den im Rahmen der gattungsbildenden Merkmale genannten Bauelementen weist das Schneidwerk eine längs- sowie höhenverstellbare Haspel sowie eine Einzugsschnecke auf. Diese Einzugsschnecke fördert das gemähte Erntegut in Richtung eines mittig angeordneten Einzugsschacht, in welchem dieses von einem Kettenförderer einem Dreschwerk des Mähdreschers zuführt wird.

Das Schneidwerk soll im Allgemeinen zum Mähen und zum Aufnehmen unterschiedlicher Arten von Erntegut geeignet sein. Zum einen kann es sich um Getreidearten mit unterschiedlichen Halmlängen handeln, zum anderen um liegendes Getreide. Letzteres tritt primär dann auf, wenn das bereits reife Getreide starkem Regen ausgesetzt war. Dabei sind die Halme zumeist in Bezug auf die Mährichtung des Schneidwerkes in unterschiedlichen Richtungen geknickt. Außerdem treten bei der Ernte von Raps, der im Bestand über eine sehr große Anzahl von Halmen und über eine große Halmlänge verfügt, völlig andere Verhältnisse auf, als das beispielsweise bei den zu mähenden Getreidearten der Fall ist. Aus diesem Grund war es bislang in der Regel erforderlich, das für die Getreideernte vorgesehene Schneidwerk gegen ein für die Rapsernte geeignetes auszutauschen. Für den landwirtschaftlichen Betrieb oder das Lohnunternehmen entstanden dadurch erhebliche Kosten und die Umrüstung war außerdem mit einem zusätzlichen Arbeits- und Zeitaufwand verbunden.

Grundsätzlich gibt es einige Parameter, die in Bezug auf die Halmlänge der zu erntenden Getreidesorte oder auf das Schneiden und Ernten von Raps zu variieren sind. Dabei geht es unter anderem um die Verstellung der am Schneidwerk angeordneten Haspel, sowohl in der Höhe als auch in Bezug auf die Lage des Mähwerks. Weiterhin geht es um eine Verstellung der Einzugsschnecke dann, wenn von der Getreideernte auf die Rapsernte umgestellt wird. Für eine optimale Schneidwerkskonfiguration spielt die Veränderung der Lage des Mähwerks gegenüber der Einzugsschnecke, welche Gegenstand der vorliegenden Erfindung ist, eine wesentliche Rolle. Für einen geringen Verlust des zu erntenden Schneidgutes und zur Verhinderung von Verstopfungen ist nämlich eine Einstellung einer optimalen Lage des Mähwerks in Bezug auf die Haspel und die Einzugsschnecke erforderlich. Zu diesem Zweck wird der Schneidtisch gegenüber der Schneidwerksmulde separat ausgebildet und über eine Stelleinrichtung in Mährichtung verstellt, so dass unterschiedliche Lagen des Mähwerks gegenüber der Einzugsschnecke bestimmbar sind. Der dadurch zwischen dem Schneidtisch und der Schneidwerksmulde auftretende Zwischenraum wurde bislang mittels separater Bleche, die in diesen eingefügt werden, verschlossen.

Ein Schneidwerk der im Oberbegriff des Patentanspruchs 1 genannten Gattung ist aus der EP 1 453 372 B1 bekannt. Bei diesem Schneidwerk wird bereits auf separate Einlegebleche verzichtet und stattdessen soll der das Mähwerk aufnehmende Schneidtisch über einen Hydraulikzylinder gegenüber der Schneidwerksmulde verstellt werden. Dabei kann das Bodenblech des Schneidtisches aus zwei einander übergreifenden Bodenabschnitten hergestellt sein, die mittels teleskopischer Führungsrohre jalousieartig verstellt werden. Dabei wird offengelassen, ob es sich bei diesen teleskopischen Führungsrohren um eine entsprechende Ausbildung der Kolbenstange oder um separat zu einer dann einteiligen Kolbenstange ausgebildete teleskopische Führungsrohren handeln soll. Die Verstellung der Bodenabschnitte soll aber ganz offensichtlich mittels deren Beaufschlagung durch den Hydraulikzylinder erfolgen. Ein großes Problem ist dabei, dass eine synchrone Verstellung der Bleche über die gesamte Breite des Schneidwerkes kaum zu realisieren ist. In Folge dessen können die Bodenabschnitte aufgrund des vom Hydraulikzylinder ausgeübten Zwangs verkanten und sich im Extremfall querstellen, so dass insgesamt die Funktion der Vorrichtung nicht gewährleistet ist.

Es ist Aufgabe der vorliegenden Erfindung, ein Schneidwerk für eine selbstfahrende Erntemaschine mit einem längsverschiebbaren Übergangsblech zu schaffen, bei dem die Verstellung des Übergangsblechs selbsttätig erfolgt, wenn eine Verstellung des Schneidtisches erfolgt, wobei diese in den entsprechenden Führungen aber nicht verkanten kann.

Diese Aufgabe wird, ausgehend vom Oberbegriff des Patentanspruchs 1, in Verbindung mit dessen kennzeichnenden Merkmalen gelöst. Die darauf folgenden abhängigen Ansprüche geben jeweils vorteilhafte Weiterbildungen der Erfindung wieder.

Gemäß dem kennzeichnenden Teil des Patentanspruchs 1 soll das zumindest eine Übergangsblech in seinen beiden Verschieberichtungen einerseits am Bodenblech und andererseits über zumindest eine zur Stelleinrichtung separate Nachführeinrichtung an der Schneidwerksmulde abgestützt sein. Demnach verschiebt die Stelleinrichtung, also vorzugsweise der Hydraulikzylinder nur den Schneidtisch, und das an der Schneidwerkmulde über die Nachführeinrichtung abgestützte Übergangsblech kann dieser Bewegung zumindest partiell folgen. Da keine unmittelbare Verstellung des Übergangsblechs über das Stellelement erfolgt, wird vermieden, dass das Übergangsblech verkantet und somit klemmt. Außerdem kann die Verstellung mit einfachen Mitteln durchgeführt werden. Bei einer stufenweisen Verstellung der Bleche, wie der Stand der Technik sie vorschlägt, wären komplizierte Übertragungselemente erforderlich. Es sei darauf hingewiesen, dass die Bezeichnungen Bodenblech und Übergangsblech nicht als Einschränkung auf einen bestimmten Werkstoff dieser Bauelemente zu verstehen sind, z.B. Stahlblech. Diese können auch aus anderen Werkstoffen hergestellt sein, z.B. Kunststoff usw.

Die Nachführeinrichtung lässt sich gemäß einer ersten Ausführung der Erfindung als Druckfeder ausbilden. Diese Druckfeder kann im Bereich von Führungsprofilen vorgesehen sein, über welche der Schneidtisch gegenüber der Schneidwerksmulde längsverschieblich geführt ist. Gemäß einer weiteren dazu alternativen Ausführung, die bevorzugt wird, soll die Nachführeinrichtung als Gasdruckfeder ausgebildet sein. Dabei handelt es sich um eine für eine Großserie geeignete kostengünstige Lösung, denn entsprechende Gasdruckfedern können evtl. als Katalogware bezogen werden.

Beide vorgenannten Lösungen sehen eine Nachführeinrichtung vor, die eine Druckkraft auf das Übergangsblech ausübt. Darüber hinaus ist es natürlich möglich, alternativ hierzu eine Nachführeinrichtung vorzusehen, die einerseits am Bodenblech des Schneidtisches und andererseits am Übergangsblech angreift. Diese Nachführeinrichtung sollte dabei ebenfalls federnd ausgebildet sein und eine Zugkraft zur Längsverschiebung auf das Übergangsblech übertragen.

In Weiterbildung der Erfindung sollen an der Schneidwerksmulde und am Bodenblech jeweils erste und zweite zueinander teleskopisch geführte Führungsprofile befestigt sein, die sich in Richtung der Verschiebebewegung des Schneidtisches und des Übergangsbleches erstrecken. Diese ersten und zweiten Führungsprofile sind verschiebbar ineinander angeordnet und können U-förmig oder L-förmig ausgebildet sein. Vorzugsweise sind, jeweils zueinander beabstandet, mehrere über die gesamte Breite des Schneidwerkes angeordnete Führungen mit diesen ersten und zweiten Führungsprofilen vorgesehen.

Weiterhin wird vorgeschlagen, dass am Übergangsblech zumindest ein Gleitstück befestigt ist, über welches das Übergangsblech auf den zweiten, mit dem Bodenblech verbundenen Führungsprofil geführt ist. Wie bereits dargelegt, sind über die gesamte Breite des Schneidwerkes mehrere derartige Anordnungen von ersten und zweiten Führungsprofilen vorgesehen, und somit sind gemäß einer bevorzugten Lösung Gleitstücke im Bereich jeder der vorhandenen Führungen vorgesehen. Diese Gleitstücke können beispielsweise U-förmig ausgebildet sein und das zweite Führungsprofil übergreifen. Somit dienen die entsprechenden Führungsprofile als schienenartige Elemente zur gleichzeitigen Abstützung des Übergangsblechs in Richtung des vom Schneidwerk überfahrenen Bodens und zur präzisen Führung des Übergangsbleches. Dabei kann in vorteilhafter Weise die Nachführeinrichtung an dem Gleitstück angreifen. Durch die Einleitung dieser Verschiebekraft direkt auf die Gleitstücke wird vermieden, dass durch eine ungünstige Krafteinleitung in das Übergangsblech eventuell ein derartiger Zwang auf dieses ausgeübt wird, dass es sich gegenüber den Führungen verkantet.

Von besonderem Vorteil ist eine Weiterbildung des erfindungsgemäßen Schneidwerks, bei der sich ebenfalls von der Schneidwerksmulde aus in Bewegungsrichtung des Übergangsbleches Führungsprofile erstrecken, auf denen das Übergangsblech geführt ist, wobei die Auswärtsbewegung des Übergangsbleches durch einen entsprechenden Stellweg der Nachführeinrichtung auf 50% des maximalen Verschiebeweges des Bodenblechs begrenzt ist. Somit wird das unterhalb des Bodenblechs liegende Übergangsblech beim Herausfahren des Schneidtisches bis zum halben Verfahrweg nachgeschoben, wobei es sich dann teilweise unterhalb des Bodenblechs befindet. Über den restlichen Verstellweg bis zu einer maximalen Position wird dann allein der Schneidtisch mit samt dem Bodenblech verschoben.

Da, wie weiterhin vorgesehen, am Bodenblech Mitnehmer vorgesehen sind, die nach unten über den Rand des Übergangsblechs vorstehen, wird bei einer anschließenden Einwärtsbewegung des Bodenbleches, mit welcher ein kurzer Abstand zwischen dem Mähwerk und der Einzugsschnecke einstellbar ist, das Übergangsblech wieder in seine Ausgangslage zurückbewegt.

Da Schneidwerke inzwischen auf Grund der Größe der Erntemaschinen mit erheblicher Arbeitsbreite ausgeführt werden, empfiehlt es sich, das Übergangsblech aus mehreren voneinander unabhängigen Abschnitten, die zueinander in Reihe angeordnet sind, herzustellen. Jeder dieser Abschnitte verfügt dabei über zumindest eine Nachführeinrichtung, also vorzugsweise eine Gasdruckfeder und ist in den jeweiligen Bereich, den er abdeckt, auf der erfindungsgemäßen teleskopischen Führung längsbeweglich angeordnet.

Schließlich sollen sowohl an dem Schneidtisch als auch an der Schneidwerksmulde beidseitig Seitenwände ausgebildet sein, die bei Längsverstellung des Schneidtisches zueinander verschoben werden. Dabei kann eine verschiebbare Übergangswand vorgesehen sein, mittels welcher der bei einer Längsverstellung auftretende Zwischenraum verschlossen wird. Es wird also vermieden, dass über diesen Zwischenraum Erntegut verloren geht oder sich eventuell dort staut.

Weitere die Erfindung weiterbildende Maßnahmen werden nachstehend gemeinsam mit der Beschreibung vorteilhafter Ausführungsformen der Erfindung näher dargestellt. Es zeigen:
- Figur 1: eine teilweise Ansicht eines erfindungsgemäß ausgebildeten Schneidwerks von unten,
- Figur 2: einen vergrößerten Ausschnitt II aus der Darstellung des Schneidwerks in Figur 1 und
- Figur 3: eine teilweise Ansicht des Schneidwerks von oben.

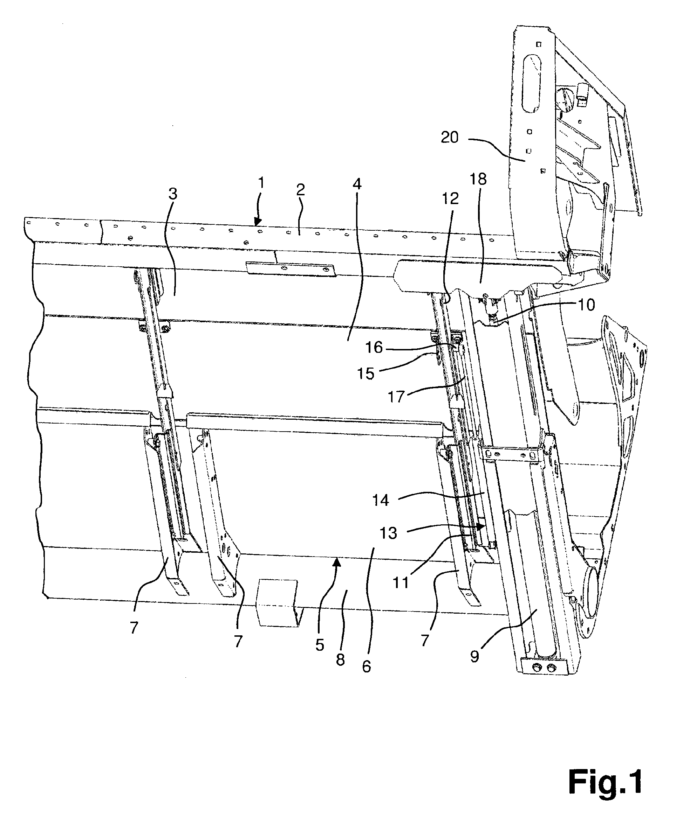

In den Figuren 1 bis 3 ist mit 1 ein Schneidwerk bezeichnet, das in seinem komplettierten Zustand eine Vielzahl weiterer Bauelemente beinhaltet. So fehlen in der Darstellung beispielsweise ein Messerbalken, eine Haspel, eine Einzugsschnecke sowie an den äußeren Enden des Schneidwerks vorgesehene Halmteiler. Außerdem ist eine mittig zum gesamten Schneidwerk und zur Einzugsschnecke liegende Durchtrittsöffnung eines Einzugskanals nicht dargestellt. Über diese Durchtrittsöffnung wird das Erntegut einem Kettenförderer zugeführt, über welchen es in ein Dreschwerk transportiert wird. An den beiden Enden des Schneidwerks können anstelle der Halmteiler außerdem vertikale Mähbalken angeordnet sein, die für die Rapsernte erforderlich sind. Soweit im Nachfolgenden Bauelemente als Bleche beschrieben werden, soll die Bauweise dieser Bauelemente nicht darauf eingeschränkt sein, dass sie aus Stahlblech hergestellt sind. Es besteht natürlich auch die Möglichkeit, diese Teile aus Kunststoff herzustellen, wobei der Kunststoff evtl. mit Verstärkungsrippen oder Verstärkungseinlagen versehen ist.

Der Darstellung in Figur 1, die das Schneidwerk 1 von seiner Unterseite zeigt, ist zu entnehmen, dass das Schneidwerk 1 in seinem in Mährichtung weisenden Bereich einen Schneidtisch 2 aufweist, an welchem üblicherweise ein nicht näher dargestelltes Mähwerk in Form eines Mähbalkens befestigt ist. Ein derartiger Mähbalken verfügt über zumindest einen oszillierend bewegten Messerbalken. Dieser Messerbalken ist dabei in Fingern geführt, die an dem Schneidtisch 2 befestigt sind. Von dem Schneidtisch 2 geht ein Bodenblech 3 aus, das sich genauso wie der Schneidtisch 2 und wie das Mähwerk über die gesamte Breite des Schneidwerks 1 erstreckt. Dabei kann sich das Bodenblech 3 aus mehreren aneinandergefügten Teilabschnitten zusammensetzen. Der Figur 1 ist weiterhin zu entnehmen, dass sich an das Bodenblech 3 ein Übergangsblech 4 anschließt, das, was der Darstellung nicht entnehmbar ist, vom Bodenblech 3 in seinem Randbereich teilweise überlappt wird. An dieses Übergangsblech 4 schließt sich eine Schneidwerksmulde 5 an, die das Basiselement des Schneidwerks 1 bildet und die zuvor erwähnten Bauteile Einzugsschnecke, Haspel usw. aufnimmt.

Ein im Wesentlichen horizontal verlaufender Abschnitt dieser Schneidwerksmulde 5 wird in seinem Randbereich von dem Übergangsblech 4 überragt. Dabei ist dieser horizontale Abschnitt 6 der Schneidwerksmulde 5 über mehrere zueinander beabstandete Längsträger 7 an einer rohrförmigen Traverse 8 geführt. An dieser rohrförmigen Traverse 8 greift eine als doppelt wirkender Hydraulikzylinder 9 ausgebildete Stelleinrichtung an. Eine in der Darstellung nach Figur 1 erkennbare Kolbenstange 10 dieses Hydraulikzylinders 9 ist mit dem Bodenblech 3 verbunden. Im Übrigen sind an den an der Schneidwerksmulde 5 ausgebildeten Längsträgern 7 erste Führungsprofile 11 befestigt, an welchen zweite Führungsprofile 12 teleskopisch geführt sind. Die in Mährichtung gewandten Enden dieser zweiten Führungsprofile 12 greifen am Bodenblech 3 des Schneidwerkstisches 2 an.

Im Übrigen weist der gegenüber der Schneidwerksmulde 5 in und entgegen der Mährichtung verlagerbare Schneidtisch 2 eine im Bereich des Hydraulikzylinders 9 vorgesehene Führung auf.

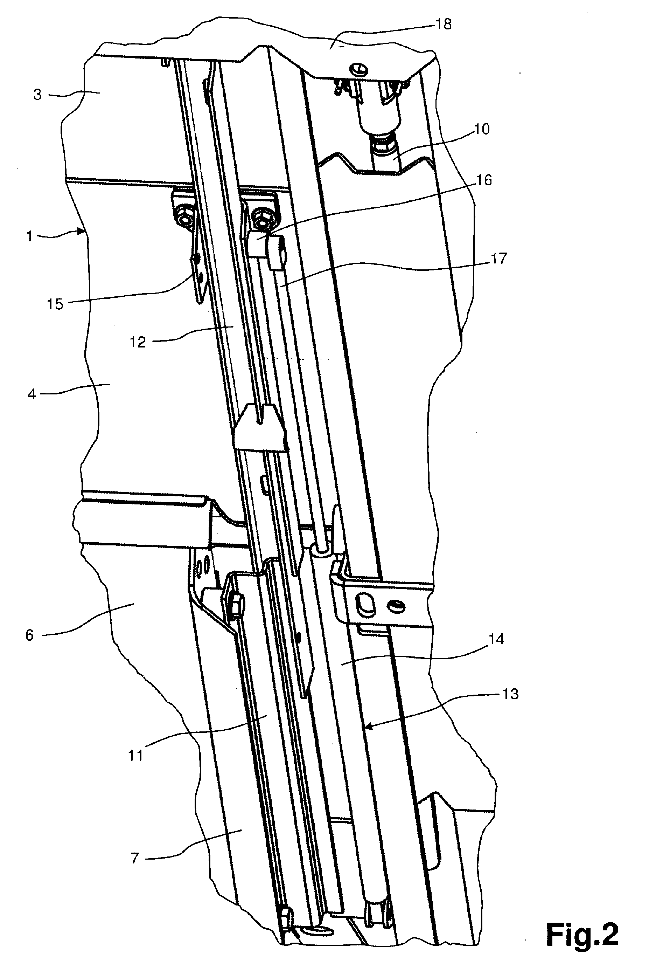

Bei dem in der Figur 1 dargestellten Ausführungsbeispiel der Erfindung ist parallel zu einer der ersten und zweiten Führungsprofile 11 bzw. 12 eine Nachführeinrichtung 13 angeordnet. Diese soll das Übergangsblech 4 entsprechend der Bewegung des Bodenblechs 3 nachführen, um so durch das Übergangsblech 4 einen zwischen der Schneidwerksmulde 5 und dem Bodenblech 3 vorhandenen Zwischenraum zu verschließen. Die Nachführeinrichtung 13 ist im vorliegenden Fall als Gasdruckfeder 14 ausgebildet. Ferner ist das Übergangsblech 4 mittels eines Gleitstückes 15 auf dem zweiten Führungsprofil 12 geführt, wobei, wie insbesondere aus der Figur 2 hervorgeht, von dem Gleitstück 15 ein Haltearm 16 ausgeht. An diesem Haltearm 16 greift eine Kolbenstange 17 der Gasdruckfeder 14 an. Eine maximale Auswärtsbewegung des Übergangsblechs 4 ist dabei durch den maximalen Stellweg der Gasdruckfeder 14 begrenzt.

Weiterhin ist im Bereich dieser Anordnung der Nachführeinrichtung 13 ein als Kufe ausgebildeter Mitnehmer 18 vorgesehen, der bei einer Einwärtsbewegung des Schneidtisches 2, also einer Verringerung des Abstandes zwischen Mähwerk und Einzugsschnecke, an dem Gleitstück 15 anschlägt und somit anschließend das Übergangsblech 4 in seine Ausgangsstellung zurückbewegen kann.

Die im Zusammengang mit der Figur 1 beschriebenen Details, soweit diese die Führung des Übergangsblechs 4 auf dem zweiten Führungsprofil 12 betreffen, sind insbesondere der im Maßstab vergrößerten Darstellung der Figur 2 zu entnehmen. Diese Figur zeigt auch, dass die Erstreckung der Bauelemente Bodenblech 3 und Übergangsblech 4 sowie die Längen der Führungsprofile 11 und 12 derart gewählt und aufeinander abgestimmt sind, dass in Verbindung mit dem Stellweg der Gasdruckfeder 14 das Übergangsblech 4 zunächst bis zu 50% des maximalen Verstellweges dem Bodenblech 3 folgt und dass dann das über dem Übergangsblech 4 liegende Bodenblech 3 den restlichen Verstellweg alleine zurücklegt.

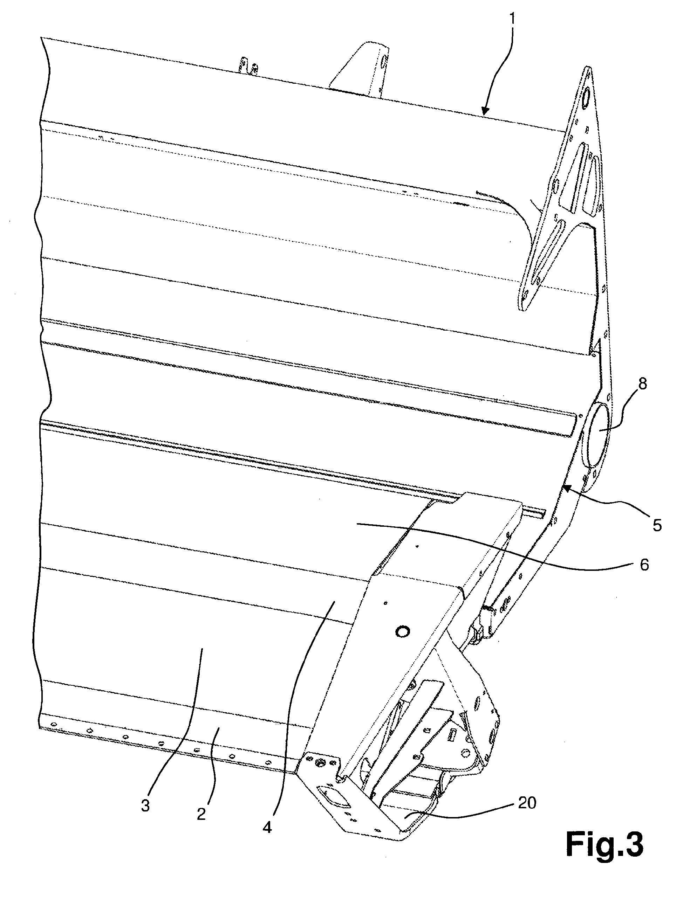

Aus der Figur 3 geht die bereits erläuterte Anordnung aus einer anderen Ansicht, nämlich einer Draufsicht hervor. Diese Darstellung zeigt einen auf die Schneidwerksmulde 5, das Übergangsblech 4 und den Schneidtisch 2 mit Bodenblech 3 reduzierten Aufbau des Schneidwerks 1. Auch bei dieser Anordnung fehlen die zuvor erwähnten Bauelemente, wie z. B. Mähwerk, Haspel, Einzugsschnecke usw. Ebenso fehlen vertikale Seitenwände, mit welchen das Schneidwerk 1 beidseitig nach außen verschlossen ist. Diese Seitenwände müssen ebenfalls mehrteilig ausgebildet sein, wobei eine Seitenwand am Schneidtisch 2 und die andere Seitenwand an der Schneidwerksmulde 5 befestigt sein müsste. Da auch diese Seitenwände derart zueinander verstellt werden können, dass ein Zwischenraum entsteht, sollte auch in diesem Bereich eine verschiebbare Übergangswand vorgesehen sein. Außerdem ist der Figur 3 zu entnehmen, dass an dem Schneidtisch eine Kufe 20 vorgesehen ist, an der üblicherweise beidseitig des Schneidwerks Halmteiler vorgesehen sind. Innerhalb dieser Kufe 20 wird außerdem der Antrieb eines nicht näher bezeichneten Mähwerks angeordnet.

Wie aus den Figuren 1 bis 3 hervorgeht, lässt sich durch diese Anordnung eine zuverlässige Verstellung des Schneidwerks 1 realisieren, bei welcher das den Zwischenraum zwischen dem Bodenblech 3 und der Schneidwerksmulde 5 verschließende Übergangsblech 4 selbsttätig zur Erzielung dieser Funktion verstellt wird, ohne dass eine Zwangsverstellung durch den Hydraulikzylinder 9 erfolgt. Die Figuren zeigen nur das in Mährichtung gesehen linke Ende des Schneidwerks 1. Es sei darauf hingewiesen, dass natürlich am entgegengesetzten Ende des Schneidwerks 1 ebenfalls eine derartige Einrichtung vorgesehen sein soll. Darüber hinaus werden über das Schneidwerk 1 verteilt in gleichmäßigen Abständen mehrere Nachführeinrichtungen 13 vorgesehen sein. In diesem Zusammenhang sei darauf hingewiesen, dass auch das Übergangsblech über die gesamte Breite des Schneidwerks 1 in einzelne Teilabschnitte unterteilt sein kann.

### Bezugszeichenliste

- 1: Schneidwerk
- 2: Schneidtisch
- 3: Bodenblech
- 4: Übergangsblech
- 5: Schneidwerksmulde
- 6: Horizontaler Abschnitt von 5
- 7: Längsträger
- 8: rohrförmige Traverse
- 9: Hydraulikzylinder
- 10: Kolbenstange
- 11: erstes Führungsprofil
- 12: zweites Führungsprofil
- 13: Nachführeinrichtung
- 14: Gasdruckfeder
- 15: Gleitstück
- 16: Haltearm
- 17: Kolbenstange
- 18: Mitnehmer
- 20: Kufe

## Patentansprüche

1. Schneidwerk (1) für eine selbstfahrende Erntemaschine mit einem ein Mähwerk aufnehmenden Schneidtisch (2), an dem ein Bodenblech (3) ausgebildet ist und der mittels einer Stelleinrichtung (9) gegenüber einer Schneidwerksmulde (5) in oder entgegen einer Mährichtung derart verschiebbar ist, dass unterschiedliche Lagen des Mähwerks.gegenüber der Schneidwerksmulde (5) einstellbar sind, wobei bei einer Verstellung des Schneidtisches (2) gegenüber der Schneidwerksmulde (5) in Mährichtung zwischen dieser und dem Bodenblech (3) ein Zwischenraum entstehen kann, der durch ein gegenüber der Schneidwerksmulde (5) längsverschiebbares Übergangsblech (4) verschließbar ist, **dadurch gekennzeichnet, dass** das zumindest eine Übergangsblech (4) in seinen beiden Verschieberichtungen einerseits am Bodenblech (3) und anderseits über zumindest eine zur Stelleinrichtung (9) separate Nachführeinrichtung (13) an der Schneidwerksmulde (5) abgestützt ist.

2. Schneidwerk nach Anspruch 1, **dadurch gekennzeichnet, dass** die Nachführeinrichtung (13) als Druckfeder ausgebildet ist.

3. Schneidwerk nach Anspruch 1, **dadurch gekennzeichnet, dass** die Nachführeinrichtung (13) als Gasdruckfeder (14) ausgebildet ist.

4. Schneidwerk nach Anspruch 1, **dadurch gekennzeichnet, dass** an der Schneidwerksmulde (5) und am Bodenblech (3) jeweils erste und zweite zueinander teleskopisch geführte Führungsprofile (11 und 12) befestigt sind, die sich in Richtung der Verschiebebewegung des Schneidtisches (2) und des Übergangsbleches (4) erstrecken.

5. Schneidwerk nach Anspruch 4, **dadurch gekennzeichnet, dass** am Übergangsblech(4) zumindest ein Gleitstück (15) befestigt ist, über welches das Übergangsblech (4) auf dem zweiten, mit dem Bodenblech (3) verbundenen Führungsprofil (12) geführt ist.

6. Schneidwerk nach Anspruch 5, **dadurch gekennzeichnet, dass** die Nachführeinrichtung (13) am Gleitstück (15) angreift.

7. Schneidwerk nach Anspruch 1, **dadurch gekennzeichnet, dass** sich von der Schneidwerksmulde (5) aus in Bewegungsrichtung des Übergangsbleches (4) Führungsprofile (11 und 12) erstrecken, auf denen das Übergangsblech (4) geführt ist, wobei die Auswärtsbewegung des Übergangsbleches (4) durch einen entsprechenden Stellweg der Nachführeinrichtung (13) auf 50% des maximalen Verschiebeweges des Bodenblechs (3) begrenzt ist.

8. Schneidwerk nach Anspruch 1, **dadurch gekennzeichnet, dass** am Bodenblech (3) Mitnehmer (18) vorgesehen sind, die bei einer Einwärtsbewegung des Bodenbleches (3) am Übergangsblech (3) angreifen.

9. Schneidwerk nach Anspruch 1, **dadurch gekennzeichnet, dass** das sich über die Breite des Schneidtisches (2) erstreckende Übergangsblech (4) aus mehreren aneinandergefügten Abschnitten hergestellt ist, die jeweils durch zumindest eine Nachführeinrichtung (13) verstellbar sind.

10. Schneidwerk nach Anspruch 1, **dadurch gekennzeichnet, dass** sowohl an dem Schneidtisch (2) als auch an der Schneidwerksmulde (5) beidseitig Seitenwände ausgebildet sind, die bei Längsverstellung des Schneidtisches (2) zueinander verschoben werden, wobei ein bei einer Längsverstellung auftretender Zwischenraum durch eine gegenüber den Seitenwänden verschiebbare Übergangswand verschließbar ist.

## Claims

1. A cutting mechanism (1) for a self-propelled harvester comprising a cutting table (2) which accommodates a mowing mechanism and on which there is provided a bottom plate (3) and which is displaceable in or in opposite relationship to a mowing direction by means of an adjusting device (9) relative to a cutting mechanism tray (5) in such a way that different positions of the mowing mechanism relative to the cutting mechanism tray (5) can be set, wherein upon adjustment of the cutting table (2) with respect to the cutting mechanism tray (5) in the mowing direction an intermediate space can occur between the cutting mechanism tray and the bottom plate (3), which intermediate space is closable by a transitional plate (4) longitudinally displaceable relative to the cutting mechanism tray (5), **characterised in that** the at least one transitional plate (4) is supported in its two directions of displacement on the one hand on the bottom plate (3) and on the other hand on the cutting mechanism tray (5) by way of at least one adjustment tracking device (13) separate from the adjusting device (9).

2. A cutting mechanism according to claim 1 **characterised in that** the adjustment tracking device (13) is in the form of a compression spring.

3. A cutting mechanism according to claim 1 **characterised in that** the adjustment tracking device (13) is in the form of a gas compression spring (14).

4. A cutting mechanism according to claim 1 **characterised in that** first and second guide profiles (11 and 12) which are telescopically guided relative to each other are respectively fixed to the cutting mechanism tray (5) and to the bottom plate (3), which guide profiles extend in the direction of the displacement movement of the cutting table (2) and the transitional plate (4).

5. A cutting mechanism according to claim 4 **characterised in that** fixed to the transitional plate (4) is at least one sliding portion (15) by way of which the transitional plate (4) is guided on the second guide profile (12) which is connected to the bottom plate (3).

6. A cutting mechanism according to claim 5 **characterised in that** the adjustment tracking device (13) engages the sliding portion (15).

7. A cutting mechanism according to claim 1 **characterised in that** guide profiles (11 and 12) extend from the cutting mechanism tray (5) in the direction of movement of the transitional plate (4), the transitional plate (4) being guided on the guide profiles, wherein the outward movement of the transitional plate (4) is limited to 50% of the maximum displacement travel of the bottom plate (3) by a corresponding adjusting travel of the adjustment tracking device (13).

8. A cutting mechanism according to claim 1 **characterised in that** provided on the bottom plate (3) are entrainment means (18) which upon an inward movement of the bottom plate (3) engage the transitional plate (4).

9. A cutting mechanism according to claim 1 **characterised in that** the transitional plate (4) extending over the width of the cutting table (2) is made from a plurality of mutually joined portions which are respectively displaceable by at least one adjustment tracking device (13).

10. A cutting mechanism according to claim 1 **characterised in that** side walls are provided on both sides both on the cutting table (2) and also the cutting mechanism tray (5), which side walls are displaced relative to each other upon longitudinal displacement of the cutting table (2), wherein an intermediate space which occurs upon a longitudinal displacement is closable by a transitional wall which is displaceable relative to the side walls.

## Revendications

1. Tablier de coupe (1) pour une machine de récolte automotrice, comportant une table de coupe (2) recevant une barre de coupe, sur laquelle table de coupe (2) est formée une tôle de fond (3) et laquelle table de coupe (2) peut être déplacée au moyen d'un dispositif de réglage (9) par rapport à un auget de tablier de coupe (5) dans un sens de coupe ou à l'opposé d'un sens de coupe, de façon que différentes positions de la barre de coupe par rapport à l'auget de tablier de coupe (5) soient réglables, dans lequel, lors d'un déplacement de la table de coupe (2) par rapport à l'auget de tablier de coupe (5) dans le sens de coupe, il peut apparaître entre celui-ci et la tôle de fond (3) un espace qui peut être fermé par une tôle de raccordement (4) pouvant coulisser longitudinalement par rapport à l'auget de tablier de coupe (5), **caractérisé en ce que** ladite au moins une tôle de raccordement (4) s'appuie, dans ses deux sens de coulissement, d'un côté sur la tôle de fond (3) et de l'autre côté, par l'intermédiaire d'au moins un dispositif suiveur (13) séparé par rapport au dispositif de réglage (9), sur l'auget de tablier de coupe (5).

2. Tablier de coupe selon la revendication 1, **caractérisé en ce que** le dispositif suiveur (13) est réalisé sous la forme d'un ressort de pression.

3. Tablier de coupe selon la revendication 1, **caractérisé en ce que** le dispositif suiveur (13) est réalisé sous la forme d'un ressort de pression à gaz (14).

4. Tablier de coupe selon la revendication 1, **caractérisé en ce que** des premier et deuxième profilés de guidage (11 et 12) guidés télescopiquement l'un par rapport à l'autre, qui s'étendent dans la direction du mouvement de coulissement de la table de coupe (2) et de la tôle de raccordement (4), sont fixés respectivement sur l'auget de tablier de coupe (5) et sur la tôle de fond (3).

5. Tablier de coupe selon la revendication 4, **caractérisé en ce qu'**à la tôle de raccordement (4) est fixée au moins une pièce coulissante (15) au moyen de laquelle la tôle de raccordement (4) est guidée sur le deuxième profilé de guidage (12) relié à la tôle de fond (3).

6. Tablier de coupe selon la revendication 5, **caractérisé en ce que** le dispositif suiveur (13) agit sur la pièce coulissante (15).

7. Tablier de coupe selon la revendication 1, **caractérisé en ce que** des profilés de guidage (11 et 12), sur lesquels la tôle de raccordement (4) est guidée, s'étendent depuis l'auget de tablier de coupe (5) dans la direction de déplacement de la tôle de raccordement (4), le déplacement vers l'extérieur de la tôle de raccordement (4) étant limité par une course de réglage correspondante du dispositif suiveur (13) à 50 % de la course de coulissement maximale de la tôle de fond (3).

8. Tablier de coupe selon la revendication 1, **caractérisé en ce que** sur la tôle de fond (3) sont prévus des moyens d'entraînement (18) qui agissent sur la tôle de raccordement (3) lors d'un déplacement vers l'intérieur de la tôle de fond (3) .

9. Tablier de coupe selon la revendication 1, **caractérisé en ce que** la tôle de raccordement (4) qui s'étend sur la largeur de la table de coupe (2) est composée de plusieurs parties aboutées qui sont réglables chacune par au moins un dispositif suiveur (13).

10. Tablier de coupe selon la revendication 1, **caractérisé en ce que** des parois latérales sont formées des deux côtés aussi bien sur la table de coupe (2) que sur l'auget de tablier de coupe (5), lesquelles sont déplacées l'une par rapport à l'autre lors d'un déplacement longitudinal de la table de coupe (2), un espace qui apparaît lors d'un déplacement longitudinal pouvant être fermé par une paroi de raccordement coulissante par rapport aux parois latérales.
